# EUROPEAN PATENT APPLICATION

(11) **EP 4 484 192 A1**
(43) Date of publication of application: **01.01.2025**
(21) Application number: 23795002.7
(22) Date of filing: 11.04.2023
(51) Int. Cl.: B60K 1/02

(54) **ELECTRIC DRIVE ASSEMBLY, FOUR-WHEEL DRIVE SYSTEM AND VEHICLE**

(30) Priority: 29.04.2022 CN 202210465932
(71) Applicant: BYD Company Limited, Shenzhen, Guangdong 518118 (CN)
(72) Inventor: YANG, Shenglin, Shenzhen, Guangdong 518118 (CN); ZHANG, Hepeng, Shenzhen, Guangdong 518118 (CN); GAO, Yuan, Shenzhen, Guangdong 518118 (CN); YANG, Lifeng, Shenzhen, Guangdong 518118 (CN); NIU, Yulin, Shenzhen, Guangdong 518118 (CN)
(74) Representative: Wu, Ting
(86) International application number: PCT/CN2023/087431
(87) International publication number: WO 2023/207569

(57) **Abstract**

An electric drive assembly, a four-wheel drive system and a vehicle. The electric drive assembly (100) comprises a first electric motor (1), a second electric motor (2), a first speed reducer (3), a second speed reducer (4) and an electric motor controller (5). The first speed reducer is connected between the first electric motor and a first wheel (200), the second speed reducer is connected between the second electric motor and a second wheel (300), and one of the first wheel and the second wheel is a left wheel, and the other one thereof is a right wheel. The first electric motor, the second electric motor, the first speed reducer and the second speed reducer are arranged in a U shape, and enclose to form an electric motor controller mounting space configured to mount the electric motor controller.

## Description

### CROSS-REFERENCE TO RELATED APPLICATIONS

The present disclosure claims priority to and benefits of Chinese Patent Application No. 202210465932.8, filed on April 29, 2022. The entire content of the above-referenced application is incorporated herein by reference.

### FIELD

The present disclosure belongs to the field of vehicle drive technologies, and relates to an electric drive assembly, a four-wheel drive system, and a vehicle.

### BACKGROUND

To further improve dynamics of an all-electric vehicle, a high-power and high-torque electric motor is generally used in the industry, resulting in generally large volume of the electric motor and an electric motor controller. In addition, to improve noise, vibration, harshness (NVH) and durability performance of an electric drive assembly, a housing of the electric drive assembly needs to be further strengthened, resulting in large volume and mass of the housing of the electric drive assembly. In this way, difficulty in arranging the entire vehicle is caused, and overall layout of the vehicle is affected, so that a trunk space is reduced, and difficulty in designing an entire chassis is increased.

### SUMMARY

A technical problem to be resolved in the present disclosure is: in response to a problem that volume and mass of a housing of an existing electric drive assembly are large, resulting in difficulty in arranging an entire vehicle, an electric drive assembly, a four-wheel drive system, and a vehicle are provided.

To resolve the foregoing technical problem, according to an aspect, the present disclosure provides an electric drive assembly, including a first electric motor, a second electric motor, a first speed reducer, a second speed reducer, and an electric motor controller.

The first speed reducer is connected between the first electric motor and a first wheel. The second speed reducer is connected between the second electric motor and a second wheel. One of the first wheel and the second wheel is a left wheel, and the other of the first wheel and the second wheel is a right wheel.

The first electric motor, the second electric motor, the first speed reducer, and the second speed reducer are arranged in a U-shape, and enclose to form an electric motor controller mounting space configured to mount the electric motor controller.

In the electric drive assembly of this embodiment of the present disclosure, a first electric motor, a second electric motor, a first speed reducer, and a second speed reducer are arranged in a U-shape, and enclose to form an electric motor controller mounting space configured to mount an electric motor controller. In this way, arranged positions of the first electric motor, the second electric motor, the first speed reducer, and the second speed reducer are concentrated. Therefore, the entire electric drive assembly has a compact structure and high integration, thereby improving a space utilization rate and reducing difficulty in arranging an entire vehicle. The electric motor controller is mounted in the electric motor controller mounting space formed through enclosing by the first electric motor, the second electric motor, the first speed reducer, and the second speed reducer, to reduce a height of the electric drive assembly occupied by the electric motor controller, so that a trunk space can be increased, and difficulty in designing a chassis can be greatly reduced. In addition, deep integration of the electric motors and the electric motor controller greatly improves strength and NVH performance of an assembly housing (an assembly of two electric motor housings, two speed changer housings, and an electric motor controller housing), and improves service life and user driving experience of the electric drive assembly.

According to another aspect, an embodiment of the present disclosure further provides a four-wheel drive system. The four-wheel drive system includes a front drive axle and a rear drive axle. The electric drive assembly is arranged on both the front drive axle and the rear drive axle.

According to still another aspect, an embodiment of the present disclosure further provides a vehicle. The vehicle includes the foregoing electric drive assembly or the foregoing four-wheel drive system.

### BRIEF DESCRIPTION OF THE DRAWINGS

FIG. 1 is a simplified diagram of an electric drive assembly according to a first embodiment of the present disclosure;
FIG. 2 is an exploded view 1 of an electric drive assembly according to a first embodiment of the present disclosure;
FIG. 3 is an exploded view 2 of an electric drive assembly according to a first embodiment of the present disclosure;
FIG. 4 is a simplified diagram of an electric drive assembly according to a second embodiment of the present disclosure;
FIG. 5 is a simplified diagram of an electric drive assembly according to a third embodiment of the present disclosure;
FIG. 6 is a simplified diagram of an electric drive assembly according to a fourth embodiment of the present disclosure;
FIG. 7 is a schematic diagram of a four-wheel drive system according to a fifth embodiment of the present disclosure; and
FIG. 8 is a schematic diagram of a vehicle according to a sixth embodiment of the present disclosure.

Reference numerals in the accompanying drawings of the description are as follows:
10000: Vehicle; 1000: Four-wheel drive system; 100: Electric drive assembly; 200: First wheel; 201: Axle of the first wheel; 300: Second wheel; 301: Axle of the second wheel; 400: Electric motor controller mounting space; 501: Front drive axle; 502: Rear drive axle; 1: First electric motor; 11: First electric motor housing; 12: First stator component; 13: First rotor component; 14: First electric motor encapsulation housing; 2: Second electric motor; 21: Second electric motor housing; 22: Second stator component; 23: Second rotor component; 24: Second electric motor encapsulation housing; 3: First speed reducer; 31: First speed reducer housing; 32: First reduction gear set; 321: First input shaft; 322: First gear; 323: First intermediate shaft; 324: Second gear; 325: Third gear; 326: First output shaft; 327: Fourth gear; 4: Second speed reducer; 41: Second speed reducer housing; 42: Second reduction gear set; 421: Second input shaft; 422: Fifth gear; 423: Second intermediate shaft; 424: Sixth gear; 425: Seventh gear; 426: Second output shaft; 427: Eighth gear; 5: Electric motor controller; 51: Electric motor controller housing; 6: Integrated housing; 61: Electric motor mounting cavity; 611: First electric motor mounting cavity; 612: Second electric motor mounting cavity; 62: Electric motor controller mounting cavity; 63: First mounting groove; 64: Blocking wall; 7: First wire connecting holder; 8: Wire connecting holder cover plate; 9: Second wire connecting holder; 10: Electric motor controller cover plate; 20: First end plate; and 30: Second end plate.

### DETAILED DESCRIPTION

To make the technical problems to be solved by the present disclosure, technical solutions, and beneficial effects clear, the following further describes the present disclosure in detail with reference to the accompanying drawings and embodiments. It should be understood that the specific embodiments described herein are merely used for explaining the present disclosure but are not intended to limit the present disclosure.

An electric drive assembly provided in an embodiment of the present disclosure includes a first electric motor, a second electric motor, a first speed reducer, a second speed reducer, and an electric motor controller. The first speed reducer is connected between the first electric motor and a first wheel. The second speed reducer is connected between the second electric motor and a second wheel. One of the first wheel and the second wheel is a left wheel, and the other of the first wheel and the second wheel is a right wheel. The first electric motor, the second electric motor, the first speed reducer, and the second speed reducer are arranged in a U-shape, and enclose to form an electric motor controller mounting space configured to mount the electric motor controller.

In some embodiments, the first electric motor and the second electric motor are arranged side by side in a vehicle width direction. The first electric motor, the second electric motor, and the electric motor controller are located between the first speed reducer and the second speed reducer.

In some embodiments, the first electric motor and the second electric motor are coaxially arranged in the vehicle width direction. An input gear of the first speed reducer is coaxially connected to an electric motor shaft of the first electric motor. An output gear of the first speed reducer is coaxially connected to an axle of the first wheel. An input gear of the second speed reducer is coaxially connected to an electric motor shaft of the second electric motor. An output gear of the second speed reducer is coaxially connected to an axle of the second wheel.

In some embodiments, the electric drive assembly further includes an integrated housing, a first speed reducer housing, and a second speed reducer housing. The integrated housing includes a first electric motor housing, a second electric motor housing, and an electric motor controller housing. A first electric motor mounting cavity configured to mount the first electric motor is formed in the first electric motor housing. A second electric motor mounting cavity configured to mount the second electric motor is formed in the second electric motor housing. The electric motor controller housing is located in the electric motor controller mounting space. An electric motor controller mounting cavity configured to mount the electric motor controller is formed in the electric motor controller housing, the first electric motor housing, the second electric motor housing, and the electric motor controller housing are connected to each other. The first speed reducer housing is connected to a first side end surface of the integrated housing. The second speed reducer housing is connected to a second side end surface of the integrated housing.

In some embodiments, the first electric motor housing, the second electric motor housing, and the electric motor controller housing are integrally formed.

In some other embodiments, the first electric motor housing and the second electric motor housing are integrally formed. The electric motor controller housing and the first electric motor housing and the second electric motor housing that are integrally formed are separately arranged and fixedly connected.

In some other embodiments, the first electric motor housing and the second electric motor housing are separately arranged. The electric motor controller housing and the first electric motor housing are fixedly connected or integrally formed. The electric motor controller housing and the second electric motor housing are fixedly connected or integrally formed.

In some embodiments, the first speed reducer housing is fixed or integrally formed on the first side end surface of the integrated housing. The second speed reducer housing is fixed or integrally formed on the second side end surface of the integrated housing.

In some embodiments, the first electric motor has a first stator component and a first rotor component. The second electric motor has a second stator component and a second rotor component. The first stator component is fixed on a cavity wall of the first electric motor mounting cavity. The first rotor component is arranged inside the first stator component. The second stator component is fixed on a cavity wall of the second electric motor mounting cavity. The second rotor component is arranged inside the second stator component.

In some other embodiments, the electric drive assembly further includes a first end plate and a second end plate. The first end plate is fixed on the first side end surface of the integrated housing. The second end plate is fixed on the second side end surface of the integrated housing. The first electric motor includes a first stator component, a first rotor component, and a first electric motor encapsulation housing configured to encapsulate the first stator component and the first rotor component. The first electric motor is arranged in the first electric motor mounting cavity and spaced apart from a cavity wall of the first electric motor mounting cavity. The first rotor component is arranged inside the first stator component. The first electric motor encapsulation housing is fixed on the first end plate. The second electric motor includes a second stator component, a second rotor component, and a second electric motor encapsulation housing configured to encapsulate the second stator component and the second rotor component. The second electric motor is arranged in the second electric motor mounting cavity and spaced apart from a cavity wall of the second electric motor mounting cavity. The second rotor component is arranged inside the second stator component. The second electric motor encapsulation housing is fixed on the second end plate.

In some embodiments, the integrated housing is provided with a first mounting groove. The first mounting groove is formed on the first electric motor housing, or the first mounting groove is formed on the second electric motor housing, or one part of the first mounting groove is arranged on the first electric motor housing and an other part of the first mounting groove is arranged on the second electric motor housing. The electric drive assembly further includes a first wire connecting holder and a wire connecting holder cover plate. The first wire connecting holder is mounted in the first mounting groove. The wire connecting holder cover plate covers an external opening of the first mounting groove. Three-phase wires extracted by the first electric motor and the second electric motor are connected to a first side of the first wire connecting holder.

In some embodiments, a blocking wall is formed between the electric motor mounting cavity and the electric motor controller mounting cavity. A second mounting groove is arranged on the blocking wall. The electric drive assembly further includes a second wire connecting holder. The second wire connecting holder is mounted in the second mounting groove. A three-phase wire extracted by the electric motor controller is connected to a first side of the second wire connecting holder. A second side of the second wire connecting holder is electrically connected to a second side of the first wire connecting holder.

In some embodiments, the electric drive assembly further includes an electric motor controller cover plate. The electric motor controller cover plate is fixed at an opening of the electric motor controller mounting cavity.

In some embodiments, the electric drive assembly further includes a first end plate and a second end plate. The first end plate is fixed on the first side end surface of the integrated housing. The second end plate is fixed on the second side end surface of the integrated housing. The electric motor shaft of the first electric motor is rotatably supported on the first end plate through a bearing. The electric motor shaft of the second electric motor is rotatably supported on the second end plate through a bearing.

In some other embodiments, the first speed reducer housing includes a first reduction gear set inside. The first reduction gear set includes a first input shaft, a first gear, a first intermediate shaft, a second gear, a third gear, a first output shaft, and a fourth gear. The first gear is arranged on the first input shaft. The second gear and the third gear are arranged on the first intermediate shaft. The fourth gear is arranged on the first output shaft. The first gear serves as the input gear of the first speed reducer and engages with the second gear. The fourth gear serves as the output gear of the first speed reducer and engages with the third gear. One end of the first input shaft is connected to the first electric motor, and an other end of the first input shaft is rotatably supported on the first speed reducer housing through a bearing. One end of the first output shaft is connected to the axle of the first wheel, and an other end of the first output shaft is rotatably supported on the first end plate through a bearing. One end of the first intermediate shaft is rotatably supported on the first speed reducer housing through a bearing, and the other end of the first intermediate shaft is rotatably supported on the first end plate through a bearing. The second speed reducer housing includes a second reduction gear set inside. The second reduction gear set includes a second input shaft, a fifth gear, a second intermediate shaft, a sixth gear, a seventh gear, a second output shaft, and an eighth gear. The fifth gear is arranged on the second input shaft. The sixth gear and the seventh gear are arranged on the second intermediate shaft. The eighth gear is arranged on the second output shaft. The fifth gear serves as the input gear of the second speed reducer and engages with the sixth gear. The eighth gear serves as the output gear of the second speed reducer and engages with the seventh gear. One end of the second input shaft is connected to the second electric motor, and an other end of the second input shaft is rotatably supported on the second speed reducer housing through a bearing. One end of the second output shaft is connected to the axle of the second wheel, and an other end of the second output shaft is rotatably supported on the second end plate through a bearing. One end of the second intermediate shaft is rotatably supported on the second speed reducer housing through a bearing, and an other end of the second intermediate shaft is rotatably supported on the second end plate through a bearing.

In some embodiments, a speed ratio of the first speed reducer is the same as a speed ratio of the second speed reducer. For example, a speed structure of the first speed reducer is the same as a speed structure of the second speed reducer (which can coincide after translation) or a speed of the first speed reducer and a speed of the second speed reducer are symmetric left and right.

In the electric drive assembly of this embodiment of the present disclosure, a first electric motor, a second electric motor, a first speed reducer, and a second speed reducer are arranged in a U-shape, and enclose to form an electric motor controller mounting space configured to mount an electric motor controller. In this way, arranged positions of the first electric motor, the second electric motor, the first speed reducer, and the second speed reducer are concentrated. Therefore, the entire electric drive assembly has a compact structure and high integration, thereby improving a space utilization rate and reducing difficulty in arranging an entire vehicle. The electric motor controller is mounted in the electric motor controller mounting space formed through enclosing by the first electric motor, the second electric motor, the first speed reducer, and the second speed reducer, to reduce a height of the electric drive assembly occupied by the electric motor controller, so that a trunk space can be increased, and difficulty in designing a chassis can be greatly reduced. In addition, deep integration of the electric motors and the electric motor controller greatly improves strength and NVH performance of an assembly housing (an assembly of two electric motor housings, two speed changer housings, and an electric motor controller housing), and improves service life and user driving experience of the electric drive assembly.

The following describes the present disclosure in detail with reference to the accompanying drawings and a number of embodiments.

### First embodiment

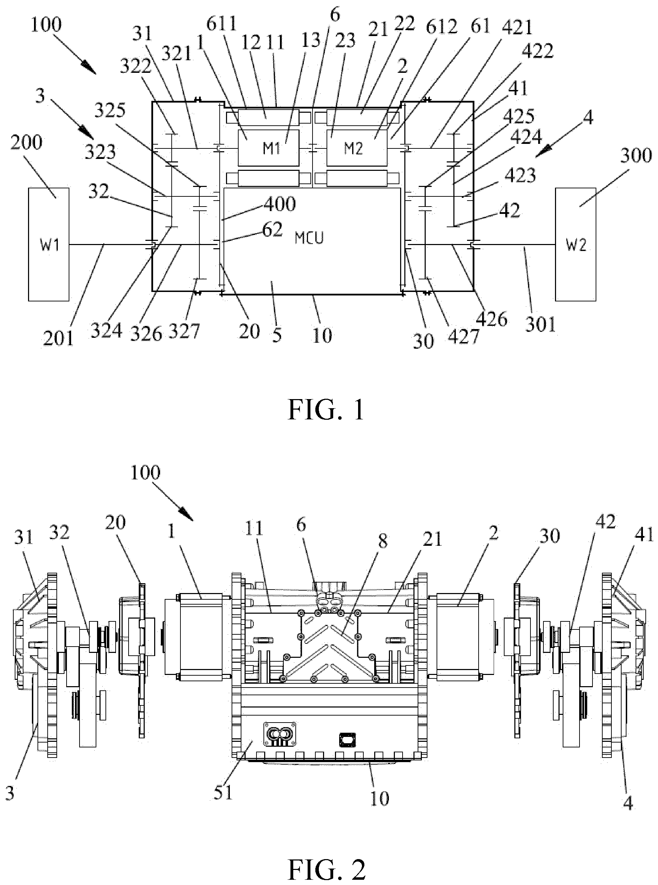

Referring to FIG. 1 to FIG. 3, an electric drive assembly 100 provided in a first embodiment of the present disclosure includes a first electric motor 1, a second electric motor 2, a first speed reducer 3, a second speed reducer 4, and an electric motor controller 5. The first speed reducer 3 is connected between the first electric motor 1 and a first wheel 200. The second speed reducer 4 is connected between the second electric motor 2 and a second wheel 300. The first wheel 200 is a left wheel, and the second wheel 300 is a right wheel. The first electric motor 1, the second electric motor 2, the first speed reducer 3, and the second speed reducer 4 are arranged in a U-shape, and enclose an electric motor controller mounting space 400 configured to mount the electric motor controller 5.

Exemplarily, the first electric motor 1 and the second electric motor 2 are arranged side by side in a vehicle width direction, and are located between the first speed reducer 3 and the second speed reducer 4. The first electric motor 1 and the second electric motor 2 are coaxially arranged in the vehicle width direction. The electric motor controller 5 can be placed into the electric motor controller mounting space 400 from an opening of the electric motor controller mounting space 400, to facilitate mounting of the electric motor controller 5.

The electric drive assembly 100 further includes an integrated housing 6, a first speed reducer housing 31, and a second speed reducer housing 41. The integrated housing 6 includes a first electric motor housing 11, a second electric motor housing 21, and an electric motor controller housing 51. A first electric motor mounting cavity 611 configured to mount the first electric motor 1 is formed in the first electric motor housing 11. A second electric motor mounting cavity 612 configured to mount the second electric motor 2 is formed in the second electric motor housing 21. The electric motor controller housing 51 is located in the electric motor controller mounting space 400. An electric motor controller mounting cavity 62 configured to mount the electric motor controller 5 is formed in the electric motor controller housing 51. The first electric motor housing 11, the second electric motor housing 21, and the electric motor controller housing 51 are integrally formed. The first speed reducer housing 31 is fixed on a first side end surface of the integrated housing 6. The second speed reducer housing 41 is fixed on a second side end surface of the integrated housing 6. The first electric motor mounting cavity 611 and the second electric motor mounting cavity 612 form an electric motor mounting cavity 61.

The first electric motor 1 has a first stator component 12 and a first rotor component 13. The second electric motor 2 has a second stator component 22 and a second rotor component 23. The first stator component 12 is fixed on a cavity wall of the first electric motor mounting cavity 611. The first rotor component 13 is arranged inside the first stator component 12. The second stator component 22 is fixed on a cavity wall of the second electric motor mounting cavity 612. The second rotor component 23 is arranged inside the second stator component 22. The electric motor controller 5 includes an internal component and an electric motor controller encapsulation housing configured to encapsulate the internal component.

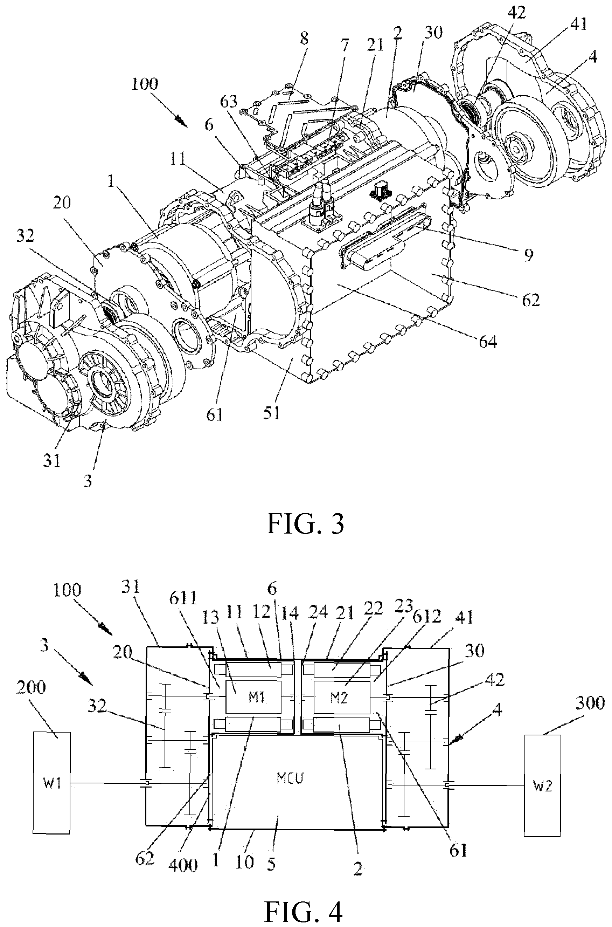

Referring to FIG. 3, the integrated housing 6 is provided with a first mounting groove 63 at a position corresponding to the first electric motor 1 and the second electric motor 2. One part of the first mounting groove 63 is arranged on the first electric motor housing 11 and an other part of the first mounting groove 63 is arranged on the second electric motor housing 21. Exemplarily, the first mounting groove 63 is a T-shaped stepped groove.

The electric drive assembly 100 further includes a first wire connecting holder 7 and a wire connecting holder cover plate 8. The first wire connecting holder 7 is mounted in the first mounting groove 63. The wire connecting holder cover plate 8 covers an external opening of the first mounting groove 63. A first seal member is arranged between the wire connecting holder cover plate 8 and the first mounting groove 63 to seal an end surface of the wire connecting holder cover plate 8. Three-phase wires extracted by the first electric motor 1 and the second electric motor 2 are connected to a first side of the first wire connecting holder 7.

A blocking wall 64 is formed between the electric motor mounting cavity 61 and the electric motor controller mounting cavity 62. A second mounting groove (not shown in the figure) is arranged on the blocking wall 64. The electric drive assembly 100 further includes a second wire connecting holder 9. The second wire connecting holder 9 is mounted in the second mounting groove. A three-phase wire extracted by the electric motor controller 5 is connected to a first side of the second wire connecting holder 9. A second side of the second wire connecting holder 9 is electrically connected to a second side of the first wire connecting holder 7. For example, a copper bar on the second side of the second wire connecting holder 9 and a copper row on the second side of the first wire connecting holder 7 are connected through a bolt. The copper row on the second side of the second wire connecting holder 9 and the copper row on the second side of the first wire connecting holder 7 are closely connected. In this way, when the second wire connecting holder 9 is fixed to the first wire connecting holder 7, conductive connection between the second wire connecting holder 9 and the first wire connecting holder 7 is also implemented. Two wire connecting holders are vertically arranged. For example, the first wire connecting holder 7 is vertically inserted into the first mounting groove 63, and the second wire connecting holder 9 is horizontally inserted into the second mounting groove. The three-phase wires of the two electric motors and the three-phase wire of the electric motor controller 5 are switched in different directions through the two wire connecting holders.

A second seal member and a third seal member are arranged between the second wire connecting holder 9 and the second mounting groove. The second seal member is configured to seal an end surface of the second wire connecting holder 9. The third seal member is configured to radially seal the second wire connecting holder 9.

Referring to FIG. 2, the electric drive assembly 100 further includes an electric motor controller cover plate 10. The electric motor controller cover plate 10 is fixed at an opening of the electric motor controller mounting cavity 62 to enclose the electric motor controller 5.

Referring to FIG. 1 and FIG. 2, the electric drive assembly 100 further includes a first end plate 20 and a second end plate 30. The first end plate 20 is fixed on the first side end surface of the integrated housing 6. The second end plate 30 is fixed on the second side end surface of the integrated housing 6. An electric motor shaft of the first electric motor 1 is rotatably supported on the first end plate 20 through a bearing. An electric motor shaft of the second electric motor 2 is rotatably supported on the second end plate 30 through a bearing.

In this embodiment, both the first speed reducer 3 and the second speed reducer 4 are parallel-shaft gear speed reducers.

The first speed reducer housing 31 includes a first reduction gear set 32 inside. The first reduction gear set 32 includes a first input shaft 321, a first gear 322, a first intermediate shaft 323, a second gear 324, a third gear 325, a first output shaft 326, and a fourth gear 327. The first gear 322 is arranged on the first input shaft 321. The second gear 324 and the third gear 325 are arranged on the first intermediate shaft 323. The fourth gear 327 is arranged on the first output shaft 326. The first gear 322 serves as an input gear of the first speed reducer 3 and engages with the second gear 324. The fourth gear 327 serves as an output gear of the first speed reducer 3 and engages with the third gear 325. One end of the first input shaft 321 is connected to the first electric motor 1, and an other end of the first input shaft 321 is rotatably supported on the first speed reducer housing 31 through a bearing. One end of the first output shaft 326 is connected to an axle 201 of the first wheel 200, and an other end of the first output shaft 326 is rotatably supported on the first end plate 20 through a bearing. One end of the first intermediate shaft 323 is rotatably supported on the first speed reducer housing 31 through a bearing, and an other end of the first intermediate shaft 323 is rotatably supported on the first end plate 20 through a bearing.

The second speed reducer housing 41 includes a second reduction gear set 42 inside. The second reduction gear set 42 includes a second input shaft 421, a fifth gear 422, a second intermediate shaft 423, a sixth gear 424, a seventh gear 425, a second output shaft 426, and an eighth gear 427. The fifth gear 422 is arranged on the second input shaft 421. The sixth gear 424 and the seventh gear 425 are arranged on the second intermediate shaft 423. The eighth gear 427 is arranged on the second output shaft 426. The fifth gear 422 serves as an input gear of the second speed reducer 4 and engages with the sixth gear 424. The eighth gear 427 serves as an output gear of the second speed reducer 4 and engages with the seventh gear 425. One end of the second input shaft 421 is connected to the second electric motor 2, and an other end of the second input shaft 421 is rotatably supported on the second speed reducer housing 41 through a bearing. One end of the second output shaft 426 is connected to an axle of the second wheel, and an other end of the second output shaft 426 is rotatably supported on the second end plate 30 through a bearing. One end of the second intermediate shaft 423 is rotatably supported on the second speed reducer housing 41 through a bearing, and an other end of the second intermediate shaft 423 is rotatably supported on the second end plate 30 through a bearing.

A function of the first end plate 20 is mainly to carry a bearing for the electric motor shaft of the first electric motor 1, and bearings for the first intermediate shaft 323 and the first output shaft 326. A function of the second end plate 30 is mainly to carry a bearing for the electric motor shaft of the second electric motor 2, and bearings for the second intermediate shaft 423 and the second output shaft 426.

The input gear (the first gear 322) of the first speed reducer 3 is coaxially connected to the electric motor shaft of the first electric motor 1. The output gear (the fourth gear 327) of the first speed reducer 3 is coaxially connected to the axle 201 of the first wheel 200. The input gear (the fifth gear 422) of the second speed reducer 4 is coaxially connected to the electric motor shaft of the second electric motor 2. The output gear (the eighth gear 427) of the second speed reducer 4 is coaxially connected to the axle 301 of the second wheel 300. Specifically, the first input shaft 321 is coaxially connected to the electric motor shaft of the first electric motor 1, the first output shaft 326 is coaxially connected to the axle 201 of the first wheel 200, the second input shaft 421 is coaxially connected to the electric motor shaft of the second electric motor 2, and the second output shaft 426 is coaxially connected to the axle 301 of the second wheel 300.

In the electric drive assembly 100 in the first embodiment of the present disclosure, the first electric motor 1, the second electric motor 2, and the electric motor controller 5 share the integrated housing 6 that is integrally formed. In this way, deep integration of the two electric motors and the electric motor controller 5, strength of the integrated housing 6, kinetic stiffness of each mounting point, and a modal shape of the electric drive assembly 100 are greatly improved, thereby further improving durability performance of the electric drive assembly 100 and driving experience of a user.

### Second embodiment

Referring to FIG. 4, a second embodiment of the present disclosure provides an electric drive assembly 100, which is different from the first embodiment in that structures and mounting manners of the first electric motor 1 and the second electric motor 2 are different.

Specifically, the first electric motor 1 includes a first stator component 12, a first rotor component 13, and a first electric motor encapsulation housing 14 configured to encapsulate the first stator component 12 and the first rotor component 13. The first electric motor 1 is arranged in the first electric motor mounting cavity 611 and spaced apart from a cavity wall of the first electric motor mounting cavity 611. The first rotor component 13 is arranged inside the first stator component 12. The first electric motor encapsulation housing 14 is fixed on the first end plate 20. That is, the first stator component 12 is fixed inside the first electric motor encapsulation housing 14. Through the fixing of the first electric motor encapsulation housing 14 and the first end plate 20, the first stator component 12 is fixed relatively.

The second electric motor 2 includes a second stator component 22, a second rotor component 23, and a second electric motor encapsulation housing 24 configured to encapsulate the second stator component 22 and the second rotor component 23. The second electric motor 2 is arranged in the second electric motor mounting cavity 612 and spaced apart from a cavity wall of the second electric motor mounting cavity 612. The second rotor component 23 is arranged inside the second stator component 33. The second electric motor encapsulation housing 24 is fixed on the second end plate 30. That is, the second stator component 22 is fixed inside the second electric motor encapsulation housing 24. Through the fixing of the second electric motor encapsulation housing 24 and the second end plate 30, the second stator component 22 is fixed relatively.

### Third embodiment

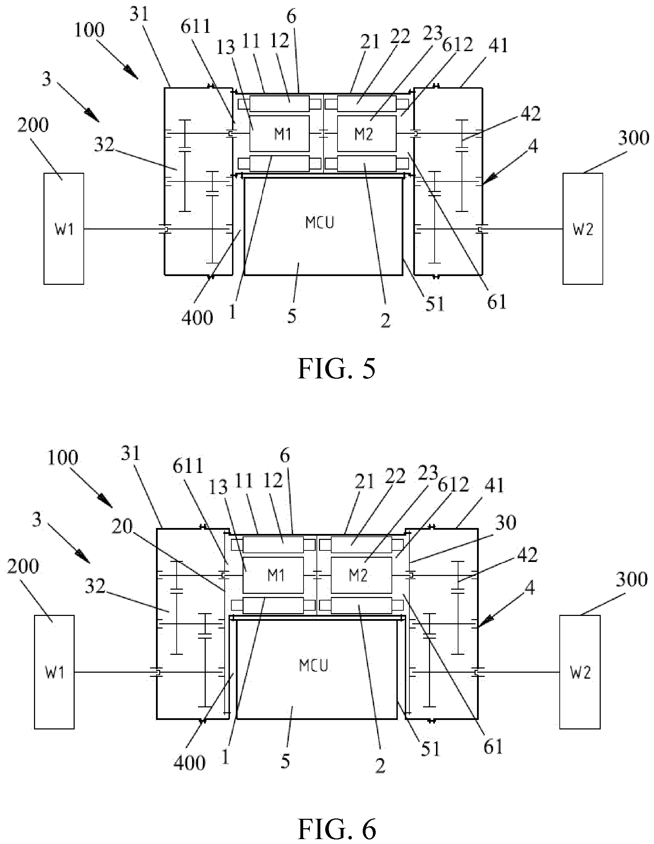

FIG. 5 is an electric drive assembly 100 according to a third embodiment of the present disclosure, which is different from the electric drive assembly 100 in the first embodiment mainly in that the first electric motor housing 11 and the second electric motor housing 21 are integrally formed. The electric motor controller housing 51 and the first electric motor housing 11 and the second electric motor housing 21 that are integrally formed are separately arranged and fixedly connected. The first speed reducer housing 31 is fixed on the first side end surface of the integrated housing 6. The second speed reducer housing 41 is fixed on the second side end surface of the integrated housing 6.

In other alternative solutions of this embodiment, the first end plate 20 and the second end plate 30 may be eliminated. The first speed reducer housing 31 is directly connected to the integrated housing 6. The second speed reducer housing 41 is directly connected to the integrated housing 6.

### Fourth embodiment

FIG. 6 is an electric drive assembly 100 according to a third embodiment of the present disclosure, which is different from the electric drive assembly 100 in the first embodiment mainly in that the first electric motor housing 11 and the second electric motor housing 21 are integrally formed. The electric motor controller housing 51 and the first electric motor housing 11 and the second electric motor housing 21 that are integrally formed are separately arranged and fixedly connected. The first speed reducer housing 31 is integrally formed on the first side end surface of the first electric motor housing 11 of the integrated housing 6. The second speed reducer housing 41 is integrally formed on the second side end surface of the second electric motor housing 21 of the integrated housing 6.

### Fifth embodiment

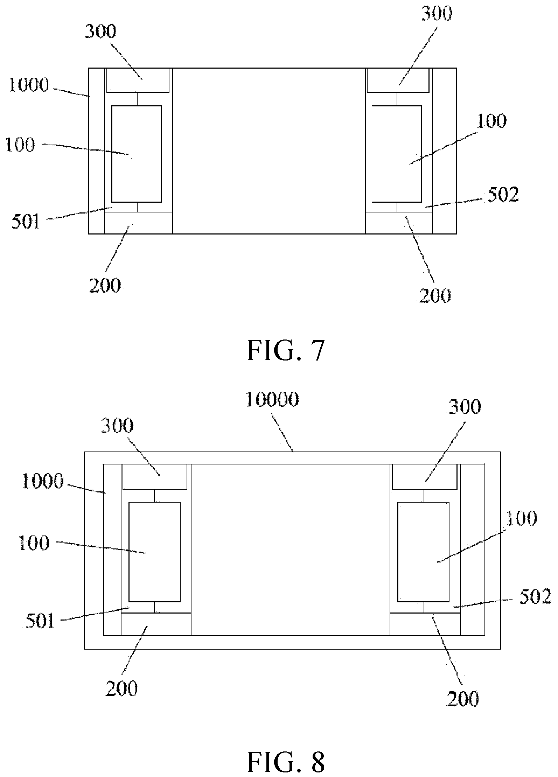

Referring to FIG. 7, a fifth embodiment of the present disclosure provides a four-wheel drive system 1000, including a front drive axle 501 and a rear drive axle 502. The foregoing electric drive assembly 100 is arranged on both the front drive axle 501 and the rear drive axle 502.

### Sixth embodiment

Referring to FIG. 8, a sixth embodiment of the present disclosure provides a vehicle 10000, including the foregoing electric drive assembly 100 or the foregoing four-wheel drive system 1000.

In addition, the present disclosure may further have the following variant embodiments.
(1) A planetary gear speed reducer is used for the first speed reducer and the second speed reducer.
(2) The first electric motor housing and the second electric motor housing are separately arranged.
(3) The first speed reducer and the second speed reducer are configured as a single-stage gear speed reducer.

The foregoing descriptions are only optional embodiments of the present disclosure, but are not intended to limit the present disclosure. Any modification, equivalent replacement, or improvement made within the principle of the present disclosure should fall within the protection scope of the present disclosure.

## Claims

1. An electric drive assembly, comprising a first electric motor, a second electric motor, a first speed reducer, a second speed reducer, and an electric motor controller;
the first speed reducer being connected between the first electric motor and a first wheel, the second speed reducer being connected between the second electric motor and a second wheel, one of the first wheel and the second wheel being a left wheel, and the other of the first wheel and the second wheel being a right wheel; and
the first electric motor, the second electric motor, the first speed reducer, and the second speed reducer being arranged in a U-shape, and enclosing to form an electric motor controller mounting space configured to mount the electric motor controller.

2. The electric drive assembly according to claim 1, wherein the first electric motor and the second electric motor are arranged side by side in a vehicle width direction, and the first electric motor, the second electric motor, and the electric motor controller are located between the first speed reducer and the second speed reducer.

3. The electric drive assembly according to claim 2, wherein the first electric motor and the second electric motor are coaxially arranged in the vehicle width direction;
an input gear of the first speed reducer is coaxially connected to an electric motor shaft of the first electric motor, and an output gear of the first speed reducer is coaxially connected to an axle of the first wheel; and
an input gear of the second speed reducer is coaxially connected to an electric motor shaft of the second electric motor, and an output gear of the second speed reducer is coaxially connected to an axle of the second wheel.

4. The electric drive assembly according to any one of claims 1 to 3, further comprising an integrated housing, a first speed reducer housing, and a second speed reducer housing, the integrated housing comprising a first electric motor housing, a second electric motor housing, and an electric motor controller housing, a first electric motor mounting cavity configured to mount the first electric motor being formed in the first electric motor housing, a second electric motor mounting cavity configured to mount the second electric motor being formed in the second electric motor housing, the electric motor controller housing being located in the electric motor controller mounting space, and an electric motor controller mounting cavity configured to mount the electric motor controller being formed in the electric motor controller housing;
the first electric motor housing, the second electric motor housing, and the electric motor controller housing being connected to each other; and the first speed reducer housing being connected to a first side end surface of the integrated housing, and the second speed reducer housing being connected to a second side end surface of the integrated housing.

5. The electric drive assembly according to claim 4, wherein the first electric motor housing, the second electric motor housing, and the electric motor controller housing are integrally formed; or the first electric motor housing and the second electric motor housing are integrally formed, and the electric motor controller housing and the first electric motor housing and the second electric motor housing that are integrally formed are separately arranged and fixedly connected; or the first electric motor housing and the second electric motor housing are separately arranged, the electric motor controller housing and the first electric motor housing are fixedly connected or integrally formed, and the electric motor controller housing and the second electric motor housing are fixedly connected or integrally formed.

6. The electric drive assembly according to claim 4 or 5, wherein the first speed reducer housing is fixed or integrally formed on the first side end surface of the integrated housing, and the second speed reducer housing is fixed or integrally formed on the second side end surface of the integrated housing.

7. The electric drive assembly according to any one of claims 4 to 6, wherein the first electric motor has a first stator component and a first rotor component, and the second electric motor has a second stator component and a second rotor component;
the first stator component is fixed on a cavity wall of the first electric motor mounting cavity, and the first rotor component is arranged inside the first stator component; and the second stator component is fixed on a cavity wall of the second electric motor mounting cavity, and the second rotor component is arranged inside the second stator component.

8. The electric drive assembly according to any one of claims 4 to 6, further comprising a first end plate and a second end plate, the first end plate being fixed on the first side end surface of the integrated housing, and the second end plate being fixed on the second side end surface of the integrated housing;
the first electric motor comprising a first stator component, a first rotor component, and a first electric motor encapsulation housing configured to encapsulate the first stator component and the first rotor component, the first electric motor being arranged in the first electric motor mounting cavity and spaced away from a cavity wall of the first electric motor mounting cavity, the first rotor component being arranged inside the first stator component, and the first electric motor encapsulation housing being fixed on the first end plate; and the second electric motor comprising a second stator component, a second rotor component, and a second electric motor encapsulation housing configured to encapsulate the second stator component and the second rotor component, the second electric motor being arranged in the second electric motor mounting cavity and spaced apart from a cavity wall of the second electric motor mounting cavity, the second rotor component being arranged inside the second stator component, and the second electric motor encapsulation housing being fixed on the second end plate.

9. The electric drive assembly according to any one of claims 4 to 8, wherein the integrated housing is provided with a first mounting groove; and the first mounting groove is formed on the first electric motor housing, or the first mounting groove is formed on the second electric motor housing, or one part of the first mounting groove is arranged on the first electric motor housing and an other part of the first mounting groove is arranged on the second electric motor housing; and
the electric drive assembly further comprises a first wire connecting holder and a wire connecting holder cover plate, the first wire connecting holder is mounted in the first mounting groove, the wire connecting holder cover plate covers an external opening of the first mounting groove, and three-phase wires extracted by the first electric motor and the second electric motor are connected to a first side of the first wire connecting holder.

10. The electric drive assembly according to claim 9, wherein a blocking wall is formed between the electric motor mounting cavity and the electric motor controller mounting cavity, and a second mounting groove is arranged on the blocking wall; and
the electric drive assembly further comprises a second wire connecting holder, the second wire connecting holder is mounted in the second mounting groove, a three-phase wire extracted by the electric motor controller is connected to a first side of the second wire connecting holder, and a second side of the second wire connecting holder is electrically connected to a second side of the first wire connecting holder.

11. The electric drive assembly according to any one of claims 4 to 10, further comprising an electric motor controller cover plate, the electric motor controller cover plate being fixed at an opening of the electric motor controller mounting cavity.

12. The electric drive assembly according to any one of claims 4 to 7, further comprising a first end plate and a second end plate, the first end plate being fixed on the first side end surface of the integrated housing, and the second end plate being fixed on the second side end surface of the integrated housing; and
the electric motor shaft of the first electric motor being rotatably supported on the first end plate through a bearing, and the electric motor shaft of the second electric motor being rotatably supported on the second end plate through a bearing.

13. The electric drive assembly according to claim 12, wherein the first speed reducer housing comprises a first reduction gear set inside, the first reduction gear set comprises a first input shaft, a first gear, a first intermediate shaft, a second gear, a third gear, a first output shaft, and a fourth gear, the first gear is arranged on the first input shaft, the second gear and the third gear are arranged on the first intermediate shaft, the fourth gear is arranged on the first output shaft, the first gear serves as the input gear of the first speed reducer and engages with the second gear, and the fourth gear serves as the output gear of the first speed reducer and engages with the third gear; one end of the first input shaft is connected to the first electric motor, an other end of the first input shaft is rotatably supported on the first speed reducer housing through a bearing, one end of the first output shaft is connected to the axle of the first wheel, an other end of the first output shaft is rotatably supported on the first end plate through a bearing, one end of the first intermediate shaft is rotatably supported on the first speed reducer housing through a bearing, and an other end of the first intermediate shaft is rotatably supported on the first end plate through a bearing;
the second speed reducer housing comprises a second reduction gear set inside, the second reduction gear set comprises a second input shaft, a fifth gear, a second intermediate shaft, a sixth gear, a seventh gear, a second output shaft, and an eighth gear, the fifth gear is arranged on the second input shaft, the sixth gear and the seventh gear are arranged on the second intermediate shaft, the eighth gear is arranged on the second output shaft, the fifth gear serves as the input gear of the second speed reducer and engages with the sixth gear, and the eighth gear serves as the output gear of the second speed reducer and engages with the seventh gear; and one end of the second input shaft is connected to the second electric motor, an other end of the second input shaft is rotatably supported on the second speed reducer housing through a bearing, one end of the second output shaft is connected to the axle of the second wheel, an other end of the second output shaft is rotatably supported on the second end plate through a bearing, one end of the second intermediate shaft is rotatably supported on the second speed reducer housing through a bearing, and an other end of the second intermediate shaft is rotatably supported on the second end plate through a bearing.

14. The electric drive assembly according to any one of claims 1 to 13, wherein a speed ratio of the first speed reducer is the same as a speed ratio of the second speed reducer.

15. A four-wheel drive system, comprising a front drive axle and a rear drive axle, the electric drive assembly according to any one of claims 1 to 14 being arranged on both the front drive axle and the rear drive axle.

16. A vehicle, comprising the electric drive assembly according to any one of claims 1 to 14 or the four-wheel drive system according to claim 15.
